# EUROPÄISCHE PATENTSCHRIFT

(11) **EP 3 449 244 B1**
(45) Veröffentlichungstag und Bekanntmachung des Hinweises auf die Patenterteilung: **11.05.2022**
(21) Anmeldenummer: 17726827.3
(22) Anmeldetag: 15.04.2017
(51) Int. Cl.: G01N 27/20, G01M 3/18

(54) **ANORDNUNG UND VERFAHREN ZUR DETEKTION EINES SCHADENS AN EINER INNENBESCHICHTUNG EINES BEHÄLTERS**
ARRANGEMENT AND METHOD FOR DETECTING DAMAGE TO AN INNER COATING OF A CONTAINER
DISPOSITIF ET PROCÉDÉ POUR LA DÉTECTION D'UNE DÉTÉRIORATION SUR UN REVÊTEMENT INTÉRIEUR D'UN RÉCIPIENT

(30) Priorität: 28.04.2016 DE 102016005112
(43) Veröffentlichungstag der Anmeldung: 06.03.2019
(73) Patentinhaber: Sidra Wasserchemie GmbH, 49479 Ibbenbüren (DE)
(72) Erfinder: SCHUMANN, Joachim, 06844 Dessau-Rosslau (DE)
(74) Vertreter: Fischer, Volker
(86) Internationale Anmeldenummer: PCT/DE2017/000110
(87) Internationale Veröffentlichungsnummer: WO 2017/186204

(56) Entgegenhaltungen:
- WO-A1-2009/157773
- US-A1- 2006 000 711
- US-A1- 2009 051 554

## Beschreibung

Die Erfindung betrifft eine Anordnung zur Detektion eines Schadens an einer Innenbeschichtung eines Behälters, wobei der Behälter eine Behälterwand aus einem leitfähigen Material aufweist, welche mit einem Blitzschutz oder einem ersten Potentialausgleich verbunden ist und wobei in einer in den Behälter führenden ersten Rohrleitung eine erste Elektrode für einen ersten Messpunkt angeordnet ist, welcher mit einer Messanordnung verbunden ist, wobei die erste Rohrleitung und der Behälter zumindest teilweise mit einer elektrisch leitfähigen Prozessflüssigkeit befüllt sind und wobei die Behälterwand eine isolierende Innenbeschichtung aus Kunststoff aufweist.

Die Erfindung betrifft auch ein Verfahren zur Detektion von Schäden an einer Innenbeschichtung eines Behälters, wobei ein mit einem Blitzschutz oder einem ersten Potentialausgleich verbundener Behälter mit einer in einer Rohrleitung vor dem Behälter angeordneten ersten Elektrode für einen ersten Messpunkt bereitgestellt wird, wobei die Rohrleitung und der Behälter zumindest teilweise mit einer elektrisch leitfähigen Prozessflüssigkeit befüllt sind und wobei eine Behälterwand des Behälters mit einer isolierenden Innenbeschichtung aus Kunststoff bereitgestellt wird.

In vielen Bereichen der Industrie werden Arbeits- oder Lagerbehälter, welche meist aus einem metallischen Werkstoff, wie beispielsweise einem Stahl, bestehen, eingesetzt. Die vorliegende Erfindung bezieht sich auf derartige Behälter, in denen chemisch aggressive Fluide gelagert werden. Ein derartiges Fluid kann beispielsweise eine auch als Prozessflüssigkeit bezeichnete Flüssigkeit sein, welche eine Säure, eine Base, ein beliebiges Zwischen- oder ein Endprodukt eines Herstellungsprozesses sein kann. Meist sind diese Prozessflüssigkeiten korrosiv und weisen eine veränderliche Leitfähigkeit auf.

Zur Vermeidung von chemischen Reaktionen der Prozessflüssigkeit mit dem Material des Arbeits- oder Lagerbehälters wird der Behälter mit einer isolierenden Gummischicht, der sogenannten Innenbeschichtung, ausgekleidet. Diese ein- oder mehrlagige Gummischicht verhindert eine chemische Reaktion zwischen dem Fluid und dem Behältermaterial und somit sowohl eine Veränderung der Zusammensetzung des Fluides selbst wie auch eine Zerstörung des Behälters. Tritt an einer beliebigen Stelle der Gummischicht eine Beschädigung auf, kann die Schicht ihre Funktion nicht mehr erfüllen. Zur Vermeidung einer Reaktion des Behältermaterials mit dem Fluid sowie einer möglichen Zerstörung des Behälters an der oder den beschädigten Stellen ist es notwendig, diese Beschädigungen schnellstmöglichst zu erkennen und deren Ursache zu beseitigen.

Derartige Behälter können sowohl stationär aufgestellt als auch auf einem Fahrzeug, wie einem Schienenfahrzeug oder einem Lkw, angeordnet werden. Denkbar ist auch eine Anordnung derartiger Behälter innerhalb eines Containers, welcher mittels eines Schienenfahrzeuges oder eines Lkw transportiert werden kann.

Ein einfaches Anlegen einer Messspannung, beispielsweise zwischen der leitfähigen Behälterwand eines Stahlbehälters und einer in einem leitfähigen Fluid angeordneten Elektrode, kann aber zu einer Elektrolyse führen und somit das Messergebnis beeinflussen.

Üblich ist es, die Behälterwandung aus Blitzschutzgründen zu erden, wobei in diesem Fall ein Wert für einen Widerstand R zwischen dem Behälter und einem Blitzschutz oder Potentialausgleich in der Größenordnung von weniger als 50 Ohm gemessen werden kann.

Oft werden die Prozessflüssigkeiten aus dem elektrisch leitenden, geerdeten Behälter über nichtleitende Kunststoffrohre zu einem Bestimmungsort geführt.

Die elektrisch leitfähigen Prozessflüssigkeiten müssen nicht zwangsläufig eine elektrisch leitende Verbindung zur Erde, zum Blitzschutz oder zum Potentialausgleich haben. Je schlechter eine solche Verbindung ist, um so einfacher gestaltet sich die elektrische Detektion eines Schadens an einer Innenbeschichtung eines Behälters (Auskleidungsschaden), da der Stromfluss von der Prozessflüssigkeit zur Behälterwand dann im Idealfall nur über die schadhafte Auskleidung des Behälters erfolgen kann.

Oft ergibt sich jedoch ungewollt, für den eigentlichen Prozess ohne Belang, eine elektrisch leitende Verbindung der Prozessflüssigkeit zur Erde, zum Blitzschutz oder zum Potentialausgleich beispielsweise über die nachfolgenden Strompfade:
- elektrisch leitende Pumpengehäuse, Pumpendichtringe oder ähnliche Elemente, die geerdet sind;
- Masseausgleichsscheiben an induktiven und anderen Durchflussmessern, die ebenfalls geerdet sein können;
- Wärmetauscher, die selbst elektrisch leitend sind und über elektrisch leitfähige Wärmeträgermedien wie ein Kühlwasser einen Erdschluss haben oder selbst als Anlagenteile in den Blitzschutz eingebunden sind.

Auch wenn der Wärmetauscher selbst nicht mit einem Blitzschutz oder Potentialausgleich verbunden ist, so steht das Medium Kühlwasser entweder über eine metallische Kühlwasserleitung oder durch seine eigene Leitfähigkeit meist mit einem benachbarten Potentialausgleich (Erde) in Verbindung. In diesem Fall kann ein Widerstand R zwischen der Prozessflüssigkeit und dem Potentialausgleich gemessen werden. Der genaue Messwert ist abhängig vom Abstand der Messstelle zum Potentialausgleich, der Leitfähigkeit des Kühlmediums, dem Rohrleitungsquerschnitt, der Rohrleitungslänge, vom verwendeten Messverfahren, von der Elektrodenfläche und von der Länge des Strompfades.

Bei einer einfachen Messung des Widerstands R zwischen der Prozessflüssigkeit und der Behälterwand wie auch dem Blitzschutz oder dem Potentialausgleich würde sich im Falle einer voll funktionstüchtigen Gummischicht des Behälters ein Widerstandswert gegen unendlich ergeben. Zu diesem gemessenen Widerstand R liegt aber ein Widerstand Rp der Strecke Prozessflüssigkeit, Wärmetauscher, Kühlwasser und Potentialausgleich der Stromversorgung parallel. Diese Parallelschaltung verändert den bei einer funktionstüchtigen Gummischicht messbaren Gesamtwiderstand Rg auf einen Wert im Bereich zwischen mehreren hundert Ohm und mehreren Megaohm. Die gemessenen Widerstandswerte sind wiederum abhängig von der genutzten Messtechnik, die in Abhängigkeit von der Elektrodenfläche, der Länge des Strompfades sowie von Messspannung und/oder Messstrom das Messergebnis beeinflusst.

So werden beispielsweise Werte im Bereich von mehreren hundert Ohm mit handelsüblichen Erdungsmessern mit einer Messspannung kleiner 50 Volt und einem Prüfstrom von einigen Milliamper gemessen. Mit einem ISO-Meter mit einer Messspannung kleiner 50 Volt und einem Prüfstrom von ca. 0,5 Milliamper werden Widerstandswerte von mehreren Megaohm ermittelt.

Eine getrennte Ermittlung der Größen der Widerstände R und Rp ist aus Gründen der Prozessführung während des laufenden Betriebs selten möglich. Auch in Phasen einer Betriebsruhe scheitert die getrennte Ermittlung der Widerstandsgrößen meist an einem unverhältnismäßig hohen Aufwand. Da beispielsweise Leitungen entleert oder unterbrochen werden müssten, um parallel wirkende Widerstände oder Widerstandsstrecken sicher ausschließen zu können.

Aus dem Stand der Technik sind mehrere Methoden zur Detektion eines Schadens an der Innenbeschichtung von Stahlbehältern bekannt, welche die Leitfähigkeit einer Prozessflüssigkeit nutzen, eine Mehrfachbeschichtung des Behälters, meist mit einer elektrisch leitenden Schicht oder einer elektrisch leitenden Zwischenschicht oder mit eingebrachten Elektroden, vorsehen sowie eine entsprechende Auswerteschaltung aufweisen.

Aus der DE 93 11 620 U1 ist eine Lösung zur Detektion eines Schadens an einer Innenbeschichtung für einen Behälter oder Kessel bekannt. Vorgesehen ist, unter einer, gegen das im Behälter zu lagernde aggressive Fluid beständigen, ersten Gummischicht eine zweite elektrisch leitfähige Gummischicht zu installieren. Zur Prüfung der Funktionstüchtigkeit der ersten Gummischicht wird eine Widerstandsmessung zwischen der leitfähigen Gummischicht und einer im leitfähigen Fluid eingebrachten Elektrode durchgeführt.

Im Falle eines Schadens würde sich der Wert bei der Widerstandsmessung deutlich verringern. Derart ist es möglich, einen Schaden in der ersten Gummischicht zu erkennen und zur Anzeige zu bringen, beispielsweise mittels eines Alarms.

Offenbart ist auch eine Möglichkeit, die zu überwachende Fläche oder die zu überwachenden Flächen in mehrere Prüfflächen zu unterteilen, um einen Schaden in der ersten Gummischicht besser lokalisieren zu können.

Vorgesehen ist außerdem, unter der elektrisch leitenden Gummischicht eine weitere Gummischicht mit den Eigenschaften der ersten Gummischicht anzuordnen. Diese dritte Gummischicht bietet den Vorteil, dass bei der Detektion eines Schadens in der ersten Gummischicht und einer Alarmauslösung der Produktionsprozess zumindest zeitweise fortgesetzt werden kann, da eine unmittelbare Gefährdung für den Behälter durch das aggressive Fluid noch nicht gegeben ist, da die dritte Gummischicht den Behälter noch vor dem Fluid schützt.

Aus der WO 93/24819 A1 ist eine Lösung zur Detektion von Schäden an einer Innenbeschichtung eines Behälters bekannt, bei welcher eine mehrschichtige Wandkonstruktion eines Behälters vorgesehen ist. Für den Fall der Einlagerung eines leitfähigen Fluides in den Behälter, kann der Behälter aus einem leitfähigen Material wie Stahl hergestellt werden und eine der Schichten der Wandkonstruktion ausbilden. Die Innenseite dieses Stahlbehälters wird mit einer nichtleitenden Schicht überzogen. Zusätzlich kann auch die Außenseite des Stahlbehälters mit einer nichtleitenden Schicht überzogen werden.

Auch in dieser Lösung ist eine Detektion eines Schadens der inneren nichtleitenden Schicht durch eine Widerstandsmessung zwischen einer in das leitfähige Fluid eingebrachten Elektrode und der Stahlwandung des Behälters vorgesehen. Auch hier wird ein Schaden durch eine deutliche Verringerung des gemessenen Widerstands erkannt und kann entsprechend angezeigt werden.

Aus der US 5191785 A ist ebenfalls eine mehrschichtige Wandkonstruktion zur Detektion eines Schadens an der Innenbeschichtung eines Behälters bekannt. Offenbart ist, dass an der Stelle einer leitenden Folie ein widerstandsfähigeres Flies eingesetzt wird, welches aus einem Graphit, Kohlenstoff oder Metallpartikel einhaltenden Material besteht und mit mehreren Elektroden verbunden ist.

Auch in diesem Fall wird ein Schaden mittels einer Widerstandsmessung erkannt und zur Anzeige gebracht.

Aus der US 6 662 632 B ist eine Anordnung zur Detektion von Schäden an einer Innenbeschichtung von Behältern bekannt, welche mittels eines Triebwagens oder Lastkraftwagens transportabel sind. Installiert werden zwei Elektroden im leitfähigen Fluid sowie zwei Elektroden an der äußeren Hülle des Tanks. Mittels entsprechender Widerstandsmessungen erfolgt die Detektion von Schäden auch während eines Transports des Behälters.

Aus der US 4 985 682 A ist eine Anordnung zur Überwachung der Kontinuität und des Vorhandenseins einer potentiellen Leckrate eines unterirdischen Tanks offenbart. Hierzu ist ein im Erdreich angeordneter Tank in einer Wanne angeordnet, welche die Umwelt im Fall eines Defekts am Tank schützen soll.

Die Lösung benötigt eine Vielzahl speziell einzuhaltender oder zu schaffender Bedingungen, wie beispielsweise Erdsonden und -kabel, Probeschächte in einem feuchtem "base layer", eine zu kalibrierende "standard electrode" und anderes mehr, womit diese Lösung nur sehr aufwendig umzusetzen ist. Ein weiterer Nachteil dieser Lösung besteht darin, dass eine schadhafte Wannenauskleidung erst in einem Zustand erkannt wird, in welchem bereits Schäden am Behälter, der Wannenauskleidung sowie der Umwelt eingetreten sind.

Aus der US 3 555 414 A ist ein Verfahren und eine Vorrichtung zur Detektion eines Schadens in einem Behälter bekannt. Diese Lösung dient dem Erkennen von Korrosionströmen/-spannungen, wenn Stahl- oder Eisenbehälter wegen einer schadhaften Emaillierung oder wegen einer anderen defekten isolierenden Beschichtung angegriffen werden. Es muss ein Anfahrprocedere zur Passivierung der Tantalelektroden und eine vorgeschriebene elektrische Polung des Systems eingehalten werden, wodurch das Verfahren sehr aufwendig ist.

Außerdem muss das System auf den jeweiligen Behälter und seinen Inhalt speziell eingestellt werden. Elektrisch leitende Verbindungen des Prozessmediums über weitere Anlagenteile, wie beispielsweise einen Wärmetauscher, zur Erde, einem Potentialausgleich oder einem Blitzschutz mit veränderlichen Widerstandswerten (wegen veränderlicher Füllstände/Leitungsquerschnitte/Medien), die über den Stromkreis zwischen den Tantalschrauben hinausgehen, machen die Einstellung hinfällig und führen zu Fehlermeldungen.

Aus der WO 2009/157773 A1 ist ein Verfahren zur Bestimmung der Beschichtungsleistung einer nichtleitenden Beschichtung bekannt. Hierbei ist die Beschichtung auf eine Metallstruktur aufgebracht, die mit einem gemeinsamen Anschluss verbunden ist. Das Verfahren umfasst die folgenden Schritte:
- Bereitstellen eines leitenden Fluids in Kontakt mit der Beschichtung, wobei die spezifische Leitfähigkeit des Fluids bekannt ist, eine erste Elektrode an einer ersten Stelle, an der die erste Elektrode mit dem leitenden Fluid in Kontakt steht, wobei die erste Elektrode über eine Spannungsquelle mit einem gemeinsamen Anschluss verbunden ist,
- Anlegen einer zweiten Elektrode an einer zweiten Stelle, an der die zweite Stelle axial verschoben ist in Bezug auf den ersten Ort, an dem die zweite Elektrode mit dem leitenden Fluid in Kontakt steht und an dem die zweite Elektrode über einen Spannungsmesser mit dem gemeinsamen Anschluss verbunden ist,
- Messen einer Länge L zwischen der ersten und der zweiten Elektrode,
- Anlegen einer niederfrequenten Spannung an die erste Elektrode,
- Messen eines resultierenden Potentials an der zweiten Elektrode mittels des Spannungsmessers,
- Berechnen eines mittleren Leckwiderstands, basierend auf der angelegten Spannung mit geringer Frequenz, dem resultierenden Potential an der zweiten Elektrode, der spezifischen Leitfähigkeit des Fluids und der Länge L.

Als weiterer Stand der Technik werden die Dokumente US 2009/051554 A1 und die US 2006/000711 A1 benannt.

Somit sind nach dem bekannten Stand der Technik in allen Ausführungen zur Detektion eines Schadens an einer Innenbeschichtung eines Behälters beispielsweise zusätzliche Schichten und Elektroden notwendig, wobei durch eine notwendige Widerstandsmessung auch eine das Fluid in seiner Zusammensetzung verändernde Elektrolyse nicht ausgeschlossen werden kann. Außerdem sind derartige Tanks meist Bestandteil einer größeren komplexen Anlage, wodurch die Widerstandsmessung zur Schadensdektion durch sich unbeabsichtigt ausbildende parallele Widerstände verfälscht wird. Diese parallelen Widerstände sind in ihrer Größe außerdem noch vom aktuellen Anlagenzustand abhängig und somit nur sehr aufwändig zu erfassen.

Die Aufgabe der Erfindung besteht darin, eine Anordnung und ein Verfahren zur Detektion eines Schadens an einer Innenbeschichtung eines Behälters anzugeben, womit eine einfache, sichere und kostengünstige Bestimmung von Schäden ermöglicht wird.

Die Aufgabe wird durch einen Gegenstand mit den Merkmalen gemäß Patentanspruch 1 und 4 der selbstständigen Patentansprüche gelöst. Weiterbildungen sind in den abhängigen Patentansprüchen 2, 3 sowie 5 bis 8 angegeben.

Vorgesehen ist es, mittels einer Messanordnung eine Messung einer elektrischen Größe wie einem Isolationswert oder einem Widerstand zur Detektion eines Schadens an der Innenbeschichtung eines Behälters vorzunehmen. Alternativ kann auch unter Verwendung von geeigneten Spannungsquellen und einer entsprechenden Beschaltung innerhalb der Messanordnung eine Spannungsmessung und/oder Strommessung zur Detektion eines Schadens erfolgen.

Dabei wird die Messanordnung derart angeordnet, dass die Messung der elektrischen Größe über mehrere Teile einer Anlage, in welcher der zu überwachende Behälter angeordnet ist, hinweg erfolgt. Im Gegensatz hierzu erfolgt eine Messung nach dem Stand der Technik nur zwischen einer im Behälter angeordneten Elektrode und der metallischen Behälterwand.

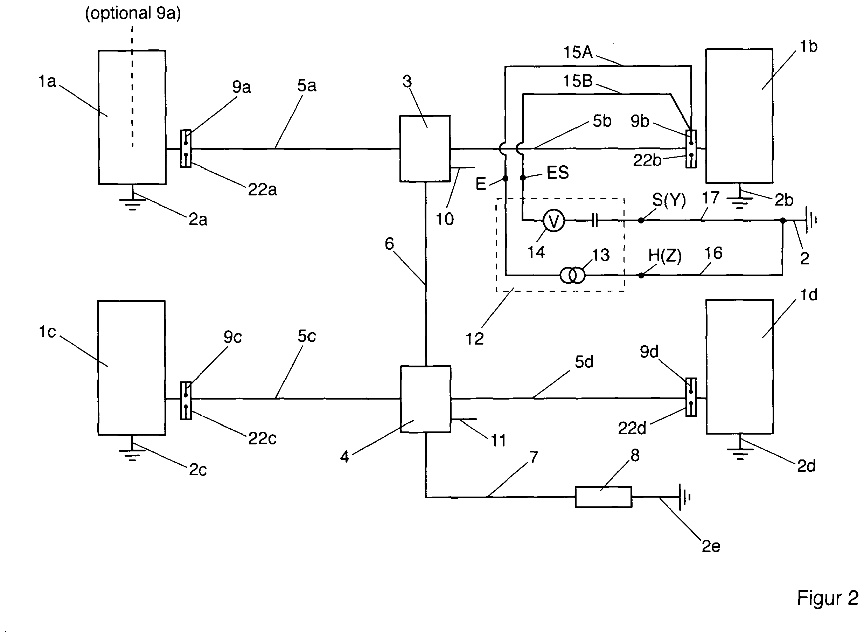

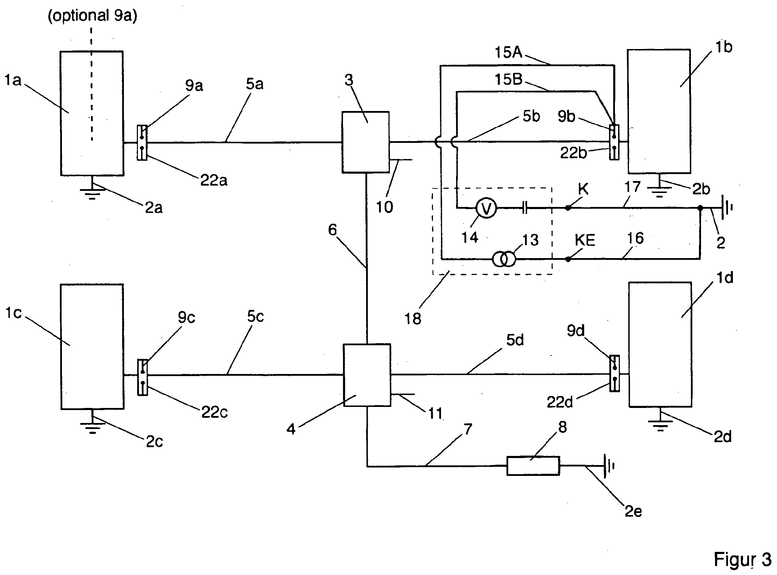

Die Ausführung der Messanordnung kann in zwei völlig verschiedenen Varianten erfolgen:
Nach der ersten Variante erfolgt eine Detektion der Störung der Messanordnung durch einen Auskleidungsschaden, welcher das Entstehen eines zusätzlichen Strompfades verursacht, was eine deutliche Signalveränderung an den genutzten Messgeräten bewirkt. Diese erste Variante wird nachfolgend bezogen auf die Figur 2 und 3 beschrieben.

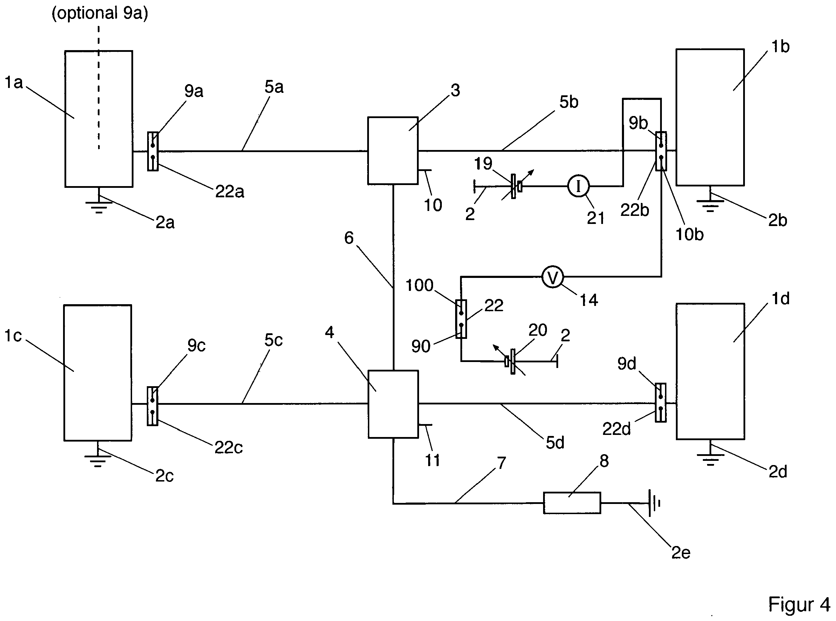

Nach der zweiten Variante erfolgt eine Messung des durch einen Auskleidungsschadens verursachten Fehlerstromes, welcher vom Prozessmedium durch die schadhafte Auskleidung über die metallische Behälterwand zum Erde/Blitzschutz/Potentialausgleich abfließt. Diese zweite Variante wird nachfolgend bezogen auf die Figur 4 beschrieben.

Für die erste Variante kann, in einer ersten Alternative der ersten Variante, ein handelsüblicher Erdungsmesser zum Einsatz kommen, wie beispielsweise ein CHAUVIN ARNOUX C.A 6460 oder ähnliche für eine diskontinuierliche Prüfung geeignete Geräte.

Für die erste Variante kann in einer zweiten Alternative ein handelsübliches ISOMETER genutzt werden, wie beispielsweise ein BENDER iso 685 oder ähnliche Geräte, welches für eine kontinuierliche Prüfung geeignet sind.

Die vorgenannten Gerätetypen messen Widerstände und erreichen ihre höchste Empfindlichkeit, wenn die Messleitungen zu den Messpunkten als 2-Leiter ausgelegt sind.

Die in den Figuren 2 und 3 beispielhaft dargestellten idealen Messanordnungen können gegebenenfalls verändert werden. Dies kann beispielsweise durch ein Auftrennen der gezeigten zwei Messpunkte in drei bis vier Messpunkte erfolgen. Dieses Auftrennen stellt eine Möglichkeit dar, die im Schadensfalle zu erwartenden Signalstärken an die Standardmessbereiche der oben genannten Geräte anzupassen.

Bei unkritischeren Anwendungsfällen kann zur Aufwandssenkung ein Zusammenfassen eines 2-Leiters zu nur einer Messleitung erfolgen. Beispielsweise könnte in der Figur 2 ein Zusammenfassung der Leitungen E und ES zu einer Messleitung E/ES oder in Figur 3 ein Zusammenfassung der Leitungen K und KE zu einer Messleitung K/KE erfolgen.

Ist mittels der oben beschriebenen ersten Variante der Messanordnung bzw. den zugehörigen Geräten sowohl in der ersten Alternative wie auch in der zweiten Alternative keine Schadensdetektion möglich, kann die zweite Variante der Messanordnung in einer dritten Alternative genutzt werden. Die für diese dritte Alternative erforderliche Technik ist ebenfalls handelsüblich.

In dieser dritten Alternative wird der erste und der zweite Messpunkt mit je einer regelbaren Gleichspannungsquelle oder je einer regelbaren frequenzsynchronen Wechselspannungsquelle verbunden und die Spannung zwischen den beiden Messpunkten überwacht. Die zwischen diesen beiden Messpunkten gemessene Spannung am Voltmeter wird durch eine entsprechende Einstellung einer oder beider Spannungsquellen auf null Volt eingeregelt. Diese auf null Volt eingeregelte Spannung fällt über unkritische, durch Augenschein einfach zu überwachende Anlagenteile, wie beispielsweise eine zu einem Behälter führende Kunststoffrohrleitung, ab. Für diesen eingeregelten Fall, in welchem der Spannungsabfall zwischen den Messpunkten null Volt ist, ist ein zu detektierender Stromfluss an der ersten Spannungsquelle (Gleichspannungsquelle oder regelbare frequenzsynchrone Wechselspannungsquelle), welche in unmittelbarer Nähe zu dem oder den zu überwachenden Behältern angeordnet ist, ein Hinweis auf eine schadhafte Gummischicht an einer Behälterwand, also einem Schaden an einer Innenbeschichtung eines oder mehrerer zu überwachender Behälter. Eine Auswertung des Stromflusses der zweiten Spannungsquelle erfolgt nicht, da dieser Stromfluss über Anlagenteile verläuft, welche im Normalzustand ("Gut-Zustand") elektrisch leitend mit dem Potentialausgleich verbunden sind.

Die Erfindung sieht auch vor, mehrere Behälter gleichzeitig zu überwachen. Hierfür werden die ersten Messpunkte mehrerer Behälter, also die jeweils in Behälternähe angeordneten Elektroden, miteinander verbunden. Darüber hinaus können auch mehrere zweite Messpunkte an verschiedenen weiteren Anlagenteilen miteinander verbunden werden.

Die Aufgabe wird auch durch ein Verfahren mit den Merkmalen gemäß Patentanspruch 9 und 11 der selbstständigen Patentansprüche gelöst. Weiterbildungen sind in den abhängigen Patentansprüchen 10, 12 und 13 angegeben.

Zur Detektion eines Schadens an einer Innenbeschichtung eines Behälters ist es bekannt, einen Widerstand zwischen einer im oder am zu überwachenden Behälter angeordneten Elektrode und dem metallischen Behältergehäuse zu messen. Da diese Messung durch das im Behälter gelagerte leitfähige Fluid, welches über Rohrleitungen mit weiteren Bestandteilen der Anlage in einer mehr oder weniger leitenden Verbindung steht, beeinflusst wird, sieht die Erfindung vor, eine Messung zwischen der im oder am Behälter angeordneten Elektrode und einem vom Behälter beabstandeten zweiten Messpunkt durchzuführen. Dieser zweite Messpunkt kann an einem über eine Rohrleitung mit dem zu überwachenden Behälter in Verbindung stehenden Anlagenteil angebracht werden. Als derartige Anlagenteile kommen beispielsweise Wärmetauscher oder andere mit dem Fluid in Verbindung stehende Bestandteile einer Anlage in Frage.

Bei einer derartigen Messung werden Einflüsse durch sich in der Anlage herausbildende Widerstände, welche parallel zum Isolationswiderstand des Behälters selbst angeordnet sind, berücksichtigt.

Das Verfahren nutzt zur Detektion eines Schadens an einer Innenbeschichtung eines Behälters eine Messung eines Widerstands oder Isolationswiderstands oder unter Verwendung geeigneter Spannungsquellen eine Spannungsmessung und/oder eine Strommessung.

Die Erfindung sieht vor, das Messergebnis auszuwerten und als ein analoges oder digitales Signal auszugeben und somit den Zustand des zu überwachenden Behälters, mindesten mit den Kategorien "Gut-Zustand" oder "Schaden an der Innenbeschichtung" zur Anzeige zu bringen. Ein derartiges Ausgabesignal kann auch eine Eingangsgröße für eine zentrale Anlagensteuerung sein und derart den Verfahrensablauf bei der Steuerung der Anlage beeinflussen. Beispielsweise kann es zu einem Schließen oder Abschalten der Verbindung zu dem vom Schaden betroffenen Behälter kommen.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- Figur 1:: eine Prinzipdarstellung einer Anlage mit mehreren Behältern, welche überwacht werden sollen,
- Figur 2:: eine erste Ausführung der Erfindung (Variante 1; Alternative 1; Erdungsmessung) zur Detektion eines Schadens an der Innenbeschichtung von Behältern,
- Figur 3:: eine zweite Ausführung der Erfindung (Variante 1; Alternative 2; ISOMETER) zur Detektion eines Schadens an der Innenbeschichtung von Behältern und
- Figur 4:: eine dritte Ausführung der Erfindung (Variante 2; Alternative 3; Bestimmung des Stromflusses durch den schadhaften Behälter) zur Detektion eines Schadens an der Innenbeschichtung von Behältern.

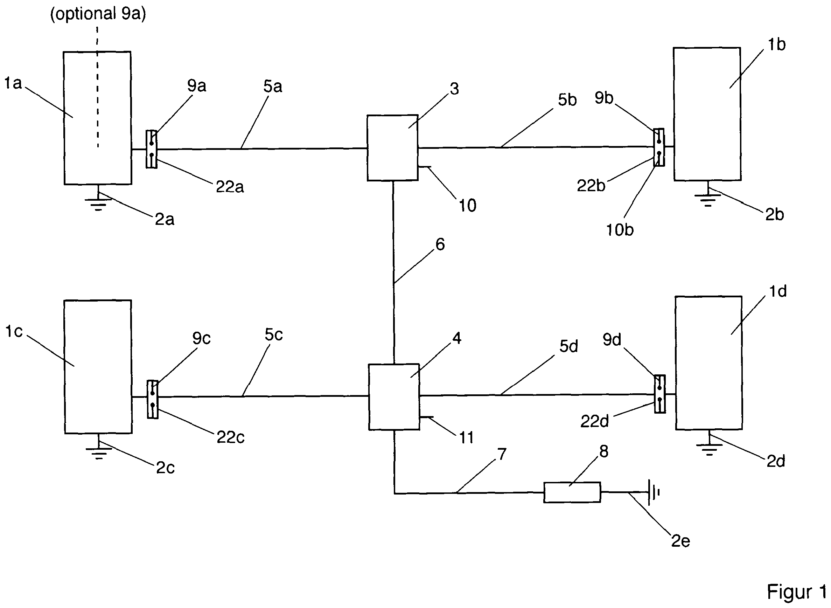

In der Figur 1 ist eine Anlage mit den für die vorliegende Erfindung wesentlichen Elementen in einer Prinzipdarstellung gezeigt. Die Darstellung zeigt vier Behälter 1a, 1b, 1c und 1d, welche jeweils einen Blitzschutz oder Potentialausgleich 2a, 2b, 2c und 2d aufweisen, über welchen sie mit einem Erdpotential verbunden sind. In diesen Behältern 1a, 1b, 1c und 1d wird das auch als leitfähige Prozessflüssigkeit bezeichnete Fluid gelagert.

Die Anlage umfasst weiterhin zwei Anlagenteile 3 und 4 auf, welche über Rohrleitungen 5 mit den zugehörigen Behältern 1 verbunden sind. Der erste Anlagenteil 3 ist über die Rohrleitung 5a mit dem ersten Behälter 1a und über die Rohrleitung 5b mit dem zweiten Behälter 1b verbunden. Der zweite Anlagenteil 4 ist über die Rohrleitung 5c mit dem dritten Behälter 1c und über die Rohrleitung 5d mit dem vierten Behälter 1d verbunden. Für die Rohrleitungen 5a, 5b, 5c und 5d werden üblicherweise elektrisch nichtleitende Kunststoffrohre eingesetzt.

Derartige Anlagenteile 3 und 4 können beispielsweise Wärmetauscher sein. Als Anlagenteil 3 und 4 können auch beliebige andere Elemente oder Baugruppen verstanden werden, welche über eine Rohrleitung 5 mit dem Behälter 1 in Verbindung stehen und vom Fluid durchflossen werden. Nachfolgend wird beispielhaft ein Wärmetauscher als Anlagenteil 3 und 4 eingesetzt.

In der Figur 1 ist weiterhin eine zwischen dem ersten und dem zweiten Wärmetauscher 3 und 4 angeordnete zweite Rohrleitung 6 dargestellt. Am Beispiel des zweiten Wärmetauschers 4 ist gezeigt, dass dieser mit einer dritten Rohrleitung 7 zur Zuführung eines Kühlmediums verbunden ist. Auch der erste Wärmetauscher 3 kann eine derartige Verbindung, welche in der Figur 1 nicht dargestellt ist, aufweisen.

Im Bereich der dritten Rohrleitung 7 ist ein Widerstand 8 eingezeichnet, welcher von der elektrischen Leitfähigkeit des durch die Rohrleitung 7 fließenden Fluides abhängig ist. Dieser Widerstand ist an dieser Stelle nur beispielhaft eingezeichnet. Auf eine Darstellung eines derartigen Widerstands 8 in den Rohrleitungen 5a, 5b, 5c und 5d wurde verzichtet, auch wenn dieser dort auftritt. Gleiches gilt auch für die Rohrleitung 6, wenn diese aus einem nichtleitenden Material besteht.

Anhand der dritten Rohrleitung 7 wird mittels des eingezeichneten Widerstands 8 gezeigt, dass der zweite Wärmetauscher 4, auch wenn dieser nicht selbst über einen Blitzschutz oder Potentialausgleich verfügt, über das in der Rohrleitung 7 fließende Kühlwasser mit seinem Widerstand 8, zumindest über einen Potentialausgleich 2e, mit einem Erdpotential verbunden ist.

Die Behälter 1a, 1b, 1c und 1d sind zum Schutz gegen die in ihnen gelagerte aggressive Prozessflüssigkeit mit einer Innenbeschichtung aus Kunststoff versehen, deren Funktionstüchtigkeit durch die vorliegende Erfindung überwacht werden soll.

Innerhalb eines Behälters 1a, 1b, 1c und 1d oder in einer Rohrleitung 5a, 5b, 5c oder 5d zu einem Behälter 1a, 1b, 1c und 1d ist jeweils ein erster Messpunkt 9a, 9b, 9c und 9d vorgesehen, welcher als ein Kontakt in der leitfähigen Prozessflüssigkeit (Tauchsonde) ausgeführt sein kann. Die Ausführung mit einer Tauchsonde ist in der Figur 1 im Behälter 1a mittels einer Strich-Strich-Linie dargestellt. Alternativ können die ersten Messpunkte 9a, 9b, 9c und 9d als Sonden in der Rohrleitung 5a, 5b, 5c oder 5d nahe dem zu überwachenden Behälter 1a, 1b, 1c oder 1d angeordnet werden. Diese werden beispielsweise als eine Kunststoffzwischenflanschscheibe 22 mit beispielsweise zwei integrierten Sondenköpfen aus Tantal, welche mit dem Fluid in Berührung stehen, ausgeführt und an einem Übergang zwischen einer Kunststoffrohrleitung und dem Flansch des innenbeschichteten Stahlbehälters eingebaut. In dieser Ausführung liegt der Messpunkt 9a, 9b, 9c oder 9d unmittelbar am Behälter 1a, 1b, 1c oder 1d. Die die Messpunkte 9a, 9b, 9c, 9d ausbildenden Elektroden können in der Kunststoffzwischenflanschscheibe 22 beispielsweise gegenüberliegend und elektrisch voneinander getrennt angeordnet werden. Weiterhin können für die Anordnung nach der Figur 2 und/oder 3 die Messpunkte 9a bis 9d, welche nicht mit der Messanordnung verbunden sind, auf ein Potential gelegt werden. Alternativ kann auch ein Verbinden oder Kurzschließen der jeweils gegenüberliegenden Elektrode, beispielsweise 9b mit 10b, zur Vergrößerung der Elektrodenoberfläche an der beispielsweise zur Messung genutzten Kunststoffzwischenflanschscheibe 22b erfolgen.

Ein zweiter Messpunkt 10 ist am ersten Wärmetauscher 3 und ein dritter Messpunkt 11 am zweiten Wärmetauscher 4 vorgesehen. Darüber hinaus kann ein weiterer zweiter Messpunkt 10b an der zweiten Kunststoffzwischenflanschscheibe 22b vorgesehen werden.

Alle Messpunkte 9, 10 und 11 sind derart ausgeführt, dass sie sich über eine nicht dargestellte Leitung mit einem zentral angeordneten Messgerät verbinden lassen. Beispielsweise führen Zuleitungen von den Messpunkten 9, 10 und 11 in eine Zentrale, in der üblicherweise auch die Anlage überwacht und gesteuert wird.

Die in der Figur 1 dargestellte Anlage zeigt nur die für die Erläuterung der Erfindung wesentlichen Bestandteile und Verbindungen. Selbstverständlich kann eine derartige Anlage über weitere Baugruppen, Anlagenteile und Rohrleitungen verfügen, um ihre Funktion vollständig erfüllen zu können.

In der Figur 2 ist die bereits aus der Figur 1 bekannte Anlage mit ihren bereits beschriebenen Bestandteilen und Verbindungen dargestellt. Die Figur 2 zeigt eine erste Ausführung der Erfindung zur Detektion eines Schadens an der Innenbeschichtung eines Behälters 1a, 1b, 1c oder 1e in der ersten Alternative der ersten Variante mit einem Erdungsmessgerät.

Zu diesem Zweck wird ein Widerstandsmeßgerät eingesetzt, welches beispielsweise ein Erdungsmesser (z.B. CHAUVIN ARNOUX C.A 6460) oder ein ISOMETER ( z.B. BENDER iso 685) sein kann, welches mit einer Spannungsquelle 13, einem Voltmeter 14 bzw. Bauteilen zur Berechnung, Anzeige, ggf. auch Speicherung des zeitlichen Verlaufes des Widerstandes der einzelnen Widerstandsmessungen zwischen einem ersten Messpunkt 9b bzw. 9a, 9c oder 9d und einem zweiten Potentialausgleich 2 ausgestattet ist.

Ein Einfügen von Schaltern, welche nicht dargestellt sind, in die Leiter der Messleitungen gestattet eine bedarfsgerechte Gestaltung der Verbindung zu den verschiedenen Messpunkten. Beispielsweise können derartige Schalter genutzt werden, um den ersten Anschluss 15A und/oder 15B des Erdungsmessgeräts 12 entweder mit dem ersten Messpunkt 9b oder alternativ mit dem ersten Messpunkt 9a zu verbinden. Die Schalter können beispielsweise gesteuert durch eine zentrale Steuerung oder per Hand entsprechend zu und abgeschaltet werden.

Unabhängig davon, ob ein diskontinuierlich messender Erdungsmesser oder ein kontinuierlich messendes ISOMETER als Messgerät 12 bzw. in Figur 3 Messgerät 18 genutzt wird, besteht die wichtigste Aufgabe bei der Wahl der Messpunkte darin, diese so festzulegen, dass die gemessenen Widerstandswerte im "GUT"-Zustand innerhalb der Meßbereichsgrenzen des Messgeräts 12 (18) liegen.

Während ein ISOMETER im "GUT"-Zustand mehrere Megaohm messen kann, endet der Messbereich von Erdungsmessern bei einigen Kiloohm.

Das heißt, mit ISOMETERN wird man eher direkt zwischen "behälternahen" Messpunkten, wie den Messpunkten 9a, 9b, 9c, 9d und Messpunkten, welche nahe der Erde, der Masse, dem Potentialausgleich oder der Behälterwand liegen messen können.

Mit Erdungsmessern 12 wird man gegebenenfalls eher zwischen "behälternahen" Messpunkten 9a, 9b, 9c, 9d und Messpunkten, die näher am zu überwachenden Behälter 1a, 1b, 1c, 1d liegen, messen müssen. Das können beispielsweise die Messpunkte 10, 11 oder auch andere Messpunkte 9 sein.

Gelingt es nicht, durch entsprechende Auswahl der Messpunkte sowie deren Lage im Behältersystem und die konstruktive Gestaltung der das Prozessmedium kontaktierenden Elektroden (Oberflächengröße) die Anwendung handelsüblicher Erdungsmesser oder ISOMETER zu ermöglichen, so bleibt die Nutzung der zweiten Variante mit der dritten Alternative, welche in der Figur 4 gezeigt wird.

In einem in der Figur 2 gezeigten Beispiel wird ein Erdungsmessgerät 12, welches beispielsweise dreipolig oder vierpolig ausgeführt sein kann und beispielsweise eine pulsierende Messspannung bereitstellt, eingesetzt. Alternativ können die Bestandteile des Erdungsmessgeräts 12, welches eine Spannungsquelle 13, ausgeführt als eine Wechselspannungsquelle oder eine pulsierende Gleichspannungsquelle, sowie ein Voltmeter 14 beinhaltet, in einer Schaltung nachgebildet werden.

Vorgesehen ist es, die Anschlüsse 15A und 15B des Erdungsmessgeräts 12 mit dem ersten Messpunkt 9b, also einer ersten Elektrode der Kunststoffzwischenflanschscheibe 22b, zu verbinden. Diese Anschluss-Punkte werden am Erdungsmessgerät 12 mit E und ES bezeichnet.

Der zweite Anschluss 16 des Erdungsmessgeräts 12 ist, wie im Beispiel der Figur 2 gezeigt, mit einem zweiten Potentialausgleich 2 verbunden. Dieser Anschluss 16 wird auch mit H(Z) bezeichnet.

Der dritte Anschluss 17 des Erdungsmessgeräts 12, welcher auch mit S(Y) bezeichnet wird, ist ebenfalls mit einem Erdungspunkt, Blitzschutz oder zweiten Potentialausgleich 2 verbunden.

In einer Alternative kann der zweite Anschluss 16 und der dritte Anschluss 17 mit dem zweiten Messpunkt 10 des Wärmetauschers 3 oder dem dritten Messpunkt 11 des Wärmetauschers 4 zur Messung verbunden werden.

Zum Einsatz kommen kann beispielsweise ein handelsüblicher 3-poliger oder 4-poliger Erdungsmesser, wie er von der Firma Chauvin Arnoux angeboten wird, welcher über die beschriebenen Anschlüsse 15A, 15B, 16 und 17 verfügt. Dieser Erdungsmesser arbeitet mit einer pulsierenden Messspannung, welche vom Erdungsmesser selbst als die eigene Messspannung erkannt wird.

Mittels der Spannungsquelle 13 (Wechselspannungsquelle oder pulsierende Gleichspannungsquelle) wird im Beispiel zwischen dem ersten Messpunkt 9b und dem zweiten Potentialausgleich 2 eine pulsierende Messspannung als sogenannte Prüfspannung angelegt.

Bei einer intakten Innenbeschichtung des oder der angeschlossenen Behälter 1a, 1b, 1c oder 1d wird ein bestimmter Spannungswert mit dem Voltmeter 14 ermittelt und durch das Erdungsmessgerät 12 ein zugehöriger Wert R für die Isolation angezeigt.

Der Wert R verringert sich im Falle eines Schadens einer Innenbeschichtung eines Behälters 1a, 1b, 1c oder 1d. Ursache für die Verringerung ist ein weiterer Strompfad, welcher vom ersten Anschluss 15A/15B beispielsweise über den ersten Messpunkt 9b der Kunststoffzwischenflanschscheibe 22b, das leitende Fluid im Behälter 1b durch die schadhafte Innenbeschichtung zum Stahlbehälter selbst und zum ersten Potentialausgleich 2b verläuft. Wenn auch der absolute Wert bei einer intakten Innenbeschichtung aller Behälter 1a, 1b, 1c und 1d abhängig von den verschiedenen Anlagenkomponenten und vom aktuell ablaufenden Prozess in der Anlage ist, so kommt es bei einem Schaden der Innenbeschichtung zu einem deutlichen wahrnehmbaren Abfall des angezeigten Werts.

Beispielsweise können die Werte zu verschiedenen Anlagenzuständen erfasst und gespeichert werden und somit einen Vergleich ermöglichen, für den Fall, dass eine oder mehrere Innenbeschichtungen fehlerhaft werden.

Neben dieser Detektion eines Schadens ist es auch möglich, den Schaden derart einzugrenzen, dass der zugehörige Behälter 1a, 1b, 1c oder 1d bestimmt wird. Hierfür wird der erste Anschluss 15A/15B des Messgeräts 12 nacheinander mit dem ersten Messpunkt 9a, 9b, 9c und 9d verbunden und der angezeigte Wert bei einem Schließen und Öffnen eines am Eingang des jeweiligen Behälters 1a, 1b, 1c oder 1d angebrachten Ventils beobachtet. Da das Schließen eines Ventils eine elektrisch leitende Fluid-Strecke unterbricht, kommt es bei einem Schließen des Ventils am Behälter 1a, 1b, 1c oder 1d mit dem Schaden in der Innenbeschichtung zu einer deutlichen Veränderung des angezeigten, zuvor gemessenen Werts. Somit ist der schadhafte Behälter 1a, 1b, 1c oder 1d lokalisiert und kann entsprechend aus dem laufenden Prozess ausgeschlossen und/oder repariert werden.

In der Figur 3 ist eine zweite Alternative der ersten Variante gezeigt, in welcher die Detektion eines Schadens an einer Innenbeschichtung eines Behälters 1a, 1b, 1c, 1d mittels eines ISO-Meters 18 erfolgt. In dieser Ausführung werden beispielsweise die ersten Anschlüsse 15A und 15B des ISO-Meters 18 mit einer ersten Elektrode 9b der beispielsweise zwei in der Kunststoffzwischenflanschscheibe 22 gegenüberliegend angeordneten und mit dem Fluid in Verbindung stehenden Elektroden verbunden. Der zweite Anschluss 16 und der dritte Anschluss 17 ist wie dargestellt mit dem zweiten Potentialausgleich 2 verbunden. Alternativ kann der zweite Anschluss 16 und der dritte Anschluss 17 mit dem zweiten Messpunkt 10 des Wärmetauschers 3 oder dem dritten Messpunkt 11 des Wärmetauschers 4 zur Messung verbunden werden.

Mit dieser Messanordnung ist es möglich, einen Schaden an einer Innenbeschichtung eines Behälters 1a, 1b, 1c, 1d dadurch zu bestimmen, dass eine erste Messung des sich ergebenden Widerstands R mit einem zwischen der Kunststoffzwischenflanschscheibe 22b und dem Behälter 1b angeordneten Ventil (Armatur) in einem geöffneten Zustand durchgeführt wird. Außerdem wird eine zweite Messung des Widerstands R mit dem Ventil in einem geschlossenen Zustand durchgeführt. Für den Fall, dass die Innenbeschichtung des Behälters 1b defekt ist, werden voneinander deutlich abweichende Werte gemessen, da das Schließen des Ventils eine Unterbrechung des Strompfads über das leitfähige Fluid bewirkt. Tritt in beiden Fällen keine wesentliche Änderung des gemessenen Widerstandswerts R auf, so ist die Innenbeschichtung eines Behälters 1b unbeschädigt.

In der Figur 4 ist die zweite Variante der Messanordnung und somit eine dritte Alternative der Erfindung gezeigt. In dieser wird wieder von einem bereits bekannten Aufbau der Anlage mit vier Behältern 1a, 1b, 1c und 1d, zwei Wärmetauschern 3 und 4 sowie den entsprechenden Verbindungsrohren ausgegangen. Auch die für die Detektion eines Schadens an einer Innenbeschichtung notwendigen ersten Messpunkte 9a, 9b, 9c, 9d werden bereitgestellt.

Der Messaufbau umfasst eine erste Spannungsquelle 19, welche eine vorzugsweise regelbare oder nicht regelbare Spannungsquelle 19 sein kann, zur Einspeisung einer Prüfspannung an einem oder mehreren ersten Messpunkten 9a, 9b, 9c oder 9d. Alternativ kann die erste Spannungsquelle 19 als eine Gleichspannungsquelle oder eine frequenzsynchrone Wechselspannungsquelle ausgebildet sein. Weiterhin ist ein Strommesser 21 vorgesehen, welcher den von der ersten Spannungsquelle 19 eingespeisten Strom I misst.

Außerdem ist eine zweite regelbare Spannungsquelle 20, ausgebildet als Gleichspannungsquelle oder frequenzsynchrone Wechselspannungsquelle, vorgesehen, welche beispielsweise einen ersten Messpunkt 90 einer weiteren Kunststoffzwischenflanschscheibe 22 mit einer Gleichspannung oder einer Wechselspannung versorgt. Die jeweils zweiten Elektroden 100 und 10b der Kunststoffzwischenflanschscheiben 22 und 22b sind mit einem Spannungsmesser 14 verbunden. Da in der vorliegenden Erfindung von einem leitfähigen Fluid ausgegangen wird, wird durch das angeschlossene Voltmeter 14 eine Spannung gemessen. Diese gemessene Spannung wird durch eine entsprechende Veränderung, beispielsweise der von der zweiten Spannungsquelle 20 bereitgestellten Gleich- oder Wechselspannung, auf einen Wert von null Volt eingeregelt.

Die weitere Kunststoffzwischenflanschscheibe 22 kann beispielsweise auch in der zweiten Rohrleitung 6 oder der dritten Rohrleitung 7 in einem entsprechenden Flansch eingebaut sein.

Ist am Voltmeter 14 die Spannung auf null Volt eingeregelt, fließt in diesem Zustand in der dargestellten Messschaltung der Figur 4 kein Strom über die erste Rohrleitung 5b. Entsprechend gilt beim Einspeisen der Gleichspannung oder der Wechselspannung der ersten Spannungsquelle 19 an allen ersten Messpunkten 9a, 9b, 9c und 9d, für eine Einregelung auf null Volt am Voltmeter 14, dass in allen vier ersten Rohrleitungen 5a, 5b, 5c und 5d kein Strom fließt. Der über die Kühlwasserleitung als dritte Rohrleitung 7 und den Widerstand 8 gegen den Potentialausgleich 2e abfließende Strom ist für die Detektion eines Schadens nicht von Bedeutung.

Beispielsweise im Fall eines Schadens an einer Innenbeschichtung des Behälters 1b, wie in der Figur 4 dargestellt, fließt ein Strom vom ersten Messpunkt 9b über das im Behälter 1b befindliche leitende Fluid zum ersten Potentialausgleich 2b, da dieser Stromfluss durch einen Schaden an der nichtleitenden Innenbeschichtung des Behälters 1b nicht mehr verhindert werden kann.

Die Anzeige des Voltmeters 14 wurde beispielsweise auf einen Wert von null Volt eingeregelt. Für diesen Fall fließt kein Strom durch die erste Rohrleitung 5b. Zeigt der Strommesser 21 jedoch einen Stromfluss an, so kann dieser nur im Schadensfall durch die im Behälter 1b befindliche Flüssigkeit, die schadhafte Innenbeschichtung, die Behälterwand zum ersten Potentialausgleich 2b fließen.

Werden durch die Spannungsquelle 19 mehrere erste Messpunkte 9a, 9b, 9c und 9d in mehreren Kunststoffzwischenflanschscheiben 22a, 22b, 22c, 22d gleichzeitig gespeist, muss nach dem Erfassen eines einen Schaden anzeigenden höheren Stroms am Strommesser 21 noch der Behälter 1a, 1b, 1c oder 1d ermittelt werden, welcher den Schaden an der Innenbeschichtung aufweist. Auch in diesem Fall werden die ersten Messpunkte 9a, 9b, 9c und 9d mittels in der Figur 4 nicht explizit dargestellter Schalter nacheinander zu- und abgeschaltet und derart der den erhöhten Stromfluss verursachende Behälter 1a, 1b, 1c oder 1d ermittelt.

In allen Varianten der Detektion eines Schadens kann sowohl eine Anzeige eines einen Schaden charakterisierenden Messwerts als auch eine Ausgabe eines Fehler- oder Alarmsignals in einer analogen oder digitalen Form erfolgen. Derart kann die Erfindung in eine bestehende zentrale Anlagensteuerung integriert werden.

Allgemein zusammengefasst gilt für die erste Variante sowohl in der ersten Alternative wie auch in der zweiten Alternative der Figuren 2 und 3 Nachfolgendes.

Alle Elektroden gleichen Namens (9a, 9b, 9c, 9d) und alle Massen oder Erdanschlüsse könnten auf jeweils ein Potential gelegt werden. Derart wird eine Überwachung mehrerer Behälter mit einem Messgerät ermöglicht. Für diesen Fall gilt, den oder die schadhaften Behälter 1a, 1b, 1c, 1d erkennt man bei Vorliegen eines "Schlecht"-Signales dann wie folgt:
1. Das mechanische Absperren/Freigeben der Flüssigkeitssäule in einer Rohrleitung zu einem Messpunkt oder zwischen Behälter ohne Schaden und Messpunkt bleibt ohne signifikante Auswirkung auf das Messsignal. Gleiches gilt für das elektrische Trennen/Schließen der Messleitung zu einem behälternahen Messpunkt (Behälter ohne Schaden). Im Schadensfalle führen beide vorgenannten Aktivitäten zu reproduzierbaren Signalhüben.
2. Wenn man mittels Stromzange einen Stromfluss von der Behälterwand über die Blitzschutzleitung erfasst, ist das ein sicheres Zeichen von Auskleidungsschäden. Im "GUT"-Zustand fließt hier kein Strom.

Für die zweite Variante in der dritten Alternative, wie sie in der Figur 4 dargestellt ist, gilt sinngemäß das zur ersten Variante Ausgeführte, unter der Voraussetzung, dass die weitere Kunststoffzwischenflanschscheibe 22 (ohne weiteren Buchstaben) mit den beiden Elektroden 9 und 10 (ohne weiteren Buchstaben) nicht mit den anderen Kunststoffzwischenflanschscheiben 22a, 22b, 22c, 22d und deren Elektroden 9a, 9b, 9c, 9d und 10b auf ein Potential gelegt wird.

### Bezugszeichenliste

- 1a-d: Behälter
- 2, 2a - e: Potentialausgleich/Blitzschutz/Erdung
- 3: erster Anlagenteil/Wärmetauscher
- 4: zweiter Anlagenteil/Wärmetauscher
- 5a - d: erste Rohrleitung
- 6: zweite Rohrleitung
- 7: dritte Rohrleitung
- 8: Widerstand
- 9a - d, 90: erster Messpunkt
- 10, 10b, 100: zweiter Messpunkt
- 11: dritter Messpunkt
- 12: Messgerät/Erdungsmessgerät
- 13: Spannungsquelle (Wechselspannungsquelle oder pulsierende Gleichspannungsquelle)
- 14: Voltmeter
- 15A, 15B: erster Anschluss
- 16: zweiter Anschluss
- 17: dritter Anschluss
- 18: ISO-Meter (Widerstandsmessgerät mit Spannungsquelle, I- und U-Messung)
- 19: erste regelbare Spannungsquelle (Gleichspannungsquelle oder regelbare Wechselspannungsquelle oder frequenzsynchrone regelbare Wechselspannungsquelle)
- 20: zweite regelbare Spannungsquelle (Gleichspannungsquelle oder regelbare Wechselspannungsquelle oder frequenzsynchrone regelbare Wechselspannungsquelle)
- 21: Strommesser
- 22, 22a - 22d: Kunststoffzwischenflanschscheibe

## Patentansprüche

1. Anordnung zur Detektion eines Schadens an einer Innenbeschichtung eines Behälters, wobei der Behälter (1b) eine Behälterwand aus einem leitfähigen Material aufweist, welche mit einem Blitzschutz oder einem ersten Potentialausgleich (2b) verbunden ist und wobei in einer in den Behälter (1b) führenden ersten Rohrleitung (5b) eine erste Elektrode für einen ersten Messpunkt (9b) angeordnet ist, welcher mit einer Messanordnung verbunden ist, wobei die erste Rohrleitung (5b) und der Behälter (1b) zumindest teilweise mit einer elektrisch leitfähigen Prozessflüssigkeit befüllt sind und wobei die Behälterwand eine isolierende Innenbeschichtung aus Kunststoff aufweist, **dadurch gekennzeichnet, dass** der Behälter (1b) über die erste Rohrleitung (5b) aus einem elektrisch nicht leitfähigem Material mit einem ersten Anlagenteil (3) verbunden ist, dass an dem ersten Anlagenteil (3) ein zweiter Messpunkt (10) angeordnet ist, dass der erste Messpunkt (9b) an der ersten Elektrode einer Kunststoffzwischenflanschscheibe (22b) angeordnet ist und dass die Messanordnung mit dem ersten Messpunkt (9b) und einem zweiten Potentialausgleich (2) oder dem zweiten Messpunkt (10) elektrisch leitend verbunden ist.

2. Anordnung nach Anspruch 1, **dadurch gekennzeichnet, dass** die Messanordnung eine Spannungsquelle (13) und ein Voltmeter (14) aufweist, wobei die Spannungsquelle (13) mit einem ersten Anschluss mit dem ersten Messpunkt (9b) und mit einem zweiten Anschluss mit dem zweiten Potentialausgleich (2) oder dem zweiten Messpunkt (10) verbunden ist und wobei das Voltmeter (14) mit dem ersten Messpunkt (9b) und direkt oder über eine Kapazität mit dem zweiten Potentialausgleich (2) oder dem zweiten Messpunkt (10) verbunden ist.

3. Anordnung nach Anspruch 1 oder 2, **dadurch gekennzeichnet, dass** die Messanordnung ein Erdungsmessgerät (12) oder ein Widerstandsmessgerät mit einer Spannungsquelle (18) ist.

4. Anordnung zur Detektion eines Schadens an einer Innenbeschichtung eines Behälters, wobei der Behälter (1b) eine Behälterwand aus einem leitfähigen Material aufweist, welche mit einem Blitzschutz oder einem ersten Potentialausgleich (2b) verbunden ist und wobei in einer in den Behälter (1b) führenden ersten Rohrleitung (5b) eine erste Elektrode für einen ersten Messpunkt (9b) angeordnet ist, welcher mit einer Messanordnung verbunden ist, wobei die erste Rohrleitung (5b) und der Behälter (1b) zumindest teilweise mit einer elektrisch leitfähigen Prozessflüssigkeit befüllt sind und wobei die Behälterwand eine isolierende Innenbeschichtung aus Kunststoff aufweist, **dadurch gekennzeichnet, dass** die Messanordnung eine erste regelbare Spannungsquelle (19), welche mit ihrem ersten Anschluss über einen Strommesser (21) mit dem ersten Messpunkt (9b) in einer Kunststoffzwischenflanschscheibe (22b) und mit ihrem zweiten Anschluss mit einem zweiten Potentialausgleich (2) verbunden ist, eine zweite regelbare Spannungsquelle (20), welche mit ihrem ersten Anschluss mit einem weiteren ersten Messpunkt (90) einer in einer zweiten Rohrleitung oder einer dritten Rohrleitung angeordneten weiteren Kunststoffzwischenflanschscheibe (22) und mit ihrem zweiten Anschluss mit einem dritten Potentialausgleich (2) verbunden ist, und ein Voltmeter (14), welches zwischen einem zweiten Messpunkt (100) der weiteren Kunststoffzwischenflanschscheibe (22) und einem zweiten Messpunkt (10b) der Kunststoffzwischenflanschscheibe (22b) angeschlossen ist, aufweist.

5. Anordnung nach einem der Ansprüche 1 bis 4, **dadurch gekennzeichnet, dass** die Messanordnung mit zwei ersten Messpunkten (9a, 9b) zweier Behälter (1a, 1b) und/oder mit dem zweiten Messpunkt (100) und einem dritten Messpunkt (11), welcher an einem zweiten Anlagenteil (4) angeordnet ist, verbunden ist.

6. Anordnung nach einem der Ansprüche 1 bis 5, **dadurch gekennzeichnet, dass** der erste Anlagenteil (3) und/oder der zweite Anlagenteil (4) ein Wärmetauscher ist.

7. Anordnung nach einem der Ansprüche 2 oder 3, **dadurch gekennzeichnet, dass** die Spannungsquelle (13) eine Wechselspannungsquelle oder eine pulsierende Gleichspannungsquelle ist.

8. Anordnung nach einem der Ansprüche 4 bis 7, **dadurch gekennzeichnet, dass** die erste regelbare Spannungsquelle (19) und/oder die zweite regelbare Spannungsquelle (20) eine Gleichspannungsquelle oder regelbare Wechselspannungsquelle oder frequenzsynchrone regelbare Wechselspannungsquelle ist.

9. Verfahren zur Detektion von Schäden an einer Innenbeschichtung eines Behälters, wobei ein mit einem Blitzschutz oder einem ersten Potentialausgleich (2b) verbundener Behälter (1b) mit einer in einer Rohrleitung (5b) vor dem Behälter (1b) angeordneten ersten Elektrode für einen ersten Messpunkt (9b) bereitgestellt wird, wobei die Rohrleitung (5b) und der Behälter (1b) zumindest teilweise mit einer elektrisch leitfähigen Prozessflüssigkeit befüllt sind und wobei eine Behälterwand des Behälters (1b) mit einer isolierenden Innenbeschichtung aus Kunststoff bereitgestellt wird, **dadurch gekennzeichnet, dass** ein mit dem Behälter (1b) über eine erste Rohrleitung (5b) verbundener erster Anlagenteil (3) mit einem zweiten Messpunkt (10) bereitgestellt wird und dass die Detektion eines Schadens an der Innenbeschichtung des Behälters (1b) mittels einer elektrisch mit dem ersten Messpunkt (9b) und dem zweiten Potentialausgleich (2) oder dem zweiten Messpunkt (10) verbundenen Messanordnung erfolgt, wobei der erste Messpunkt (9b) an einer Elektrode einer Kunststoffzwischenflanschscheibe (22b), welche eine oder mehrere mit der Prozessflüssigkeit in Berührung stehende Elektroden aufweist, bereitgestellt wird.

10. Verfahren nach Anspruch 9, **dadurch gekennzeichnet, dass** die Messanordnung eine Isolationsmessung oder eine Widerstandsmessung zur Detektion von Schäden an der Innenbeschichtung des Behälters (1b) durchführt.

11. Verfahren zur Detektion von Schäden an einer Innenbeschichtung eines Behälters, wobei ein mit einem Blitzschutz oder einem ersten Potentialausgleich (2b) verbundener Behälter (1b) mit einer in einer Rohrleitung (5b) vor dem Behälter (1b) angeordneten ersten Elektrode für einen ersten Messpunkt (9b) bereitgestellt wird, wobei die Rohrleitung (5b) und der Behälter (1b) zumindest teilweise mit einer elektrisch leitfähigen Prozessflüssigkeit befüllt sind und wobei eine Behälterwand des Behälters (1b) mit einer isolierenden Innenbeschichtung aus Kunststoff bereitgestellt wird, **dadurch gekennzeichnet, dass** die Messanordnung eine Spannungsmessung durchführt, wobei eine erste regelbare Spannungsquelle (19) bereitgestellt wird, welche mit ihrem ersten Anschluss über einen Strommesser (21) mit dem ersten Messpunkt (9b), welcher mittels der ersten Elektrode einer Kunststoffzwischenflanschscheibe (22b) bereitgestellt wird und mit ihrem zweiten Anschluss mit einem zweiten Potentialausgleich (2) verbunden ist, und eine zweite regelbare Spannungsquelle (20) bereitgestellt wird, welche mit ihrem ersten Anschluss mit einem an einer weiteren Kunststoffzwischenflanschscheibe (22) bereitgestellten weiteren ersten Messpunkt (90) verbunden ist, wobei die Spannungsmessung mittels eines Voltmeters (14) zwischen einem zweiten Messpunkt (100) der weiteren Kunststoffzwischenflanschscheibe (22) und einem zweiten Messpunkt (10b) der Kunststoffzwischenflanschscheibe (22b) erfolgt.

12. Verfahren nach einem der Ansprüche 9 bis 11, **dadurch gekennzeichnet, dass** bei einer Detektion eines Schadens an einer Innenbeschichtung des Behälters (1b) ein den Schaden signalisierendes, digitales oder analoges Fehlersignal ausgegeben wird.

13. Verfahren nach einem der Ansprüche 9 bis 12, **dadurch gekennzeichnet, dass** zur Detektion eines Schadens an der Innenbeschichtung des Behälters (1b) eine Messung mit der Messanordnung zwischen mindestens zwei miteinander verbundenen ersten Messpunkten (9a, 9b) zweier Behälter (1a, 1b) und dem zweiten Messpunkt (100) und/oder einem dritten Messpunkt (11), welcher an einem zweiten Anlagenteil (4) bereitgestellt wird, erfolgt.

## Claims

1. Arrangement for detecting damage to an inner coating of a container, wherein the container (1b) comprises a container wall of a conductive material, which is connected to a lightning protection or a first equipotential bonding (2b) and wherein a first electrode for a first measuring point (9b), which is connected to a measuring arrangement, is arranged in a first pipeline (5b) leading into the container (1b), wherein the first pipeline (5b) and the container (1b) are at least partially filled with an electrically conductive process liquid and wherein the container wall has an insulating inner coating of plastic, **characterized in that** the container (1b) is connected via the first pipeline (5b) of an electrically non-conductive material to a first plant part (3), **in that** a second measuring point (10) is arranged on the first plant part (3), **in that** the first measuring point (9b) is arranged on the first electrode of a plastic intermediate flange disc (22b) and **in that** the measuring arrangement is connected in an electrically conducting manner to the first measuring point (9b) and a second equipotential bonding (2) or to the second measuring point (10).

2. Arrangement according to Claim 1, **characterized in that** the measuring arrangement comprises a voltage source (13) and a voltmeter (14), wherein the voltage source (13) is connected by a first terminal to the first measuring point (9b) and by a second terminal to the second equipotential bonding (2) or to the second measuring point (10), and wherein the voltmeter (14) is connected to the first measuring point (9b) and directly or via a capacitance to the second equipotential bonding (2) or the second measuring point (10).

3. Arrangement according to Claim 1 or 2, **characterized in that** the measuring arrangement is an earth tester (12) or a resistance meter with a voltage source (18).

4. Arrangement for detecting damage to an inner coating of a container, wherein the container (1b) comprises a container wall of a conductive material, which is connected to a lightning protection or a first equipotential bonding (2b) and wherein a first electrode for a first measuring point (9b), which is connected to a measuring arrangement, is arranged in a first pipeline (5b) leading into the container (1b), wherein the first pipeline (5b) and the container (1b) are at least partially filled with an electrically conductive process liquid and wherein the container wall has an insulating inner coating of plastic, **characterized in that** the measuring arrangement comprises a first controllable voltage source (19), which is connected by its first terminal via an ammeter (21) to the first measuring point (9b) in a plastic intermediate flange disc (22b) and by its second terminal to a second equipotential bonding (2), a second controllable voltage source (20), which is connected by its first terminal to a further first measuring point (90) of a further plastic intermediate flange disc (22) arranged in a second pipeline or a third pipeline and by its second terminal to a third equipotential bonding (2), and a voltmeter (14), which is connected between a second measuring point (100) of the further plastic intermediate flange disc (22) and a second measuring point (10b) of the plastic intermediate flange disc (22b).

5. Arrangement according to one of Claims 1 to 4, **characterized in that** the measuring arrangement is connected to two first measuring points (9a, 9b) of two containers (1a, 1b) and/or to the second measuring point (100) and a third measuring point (11), which is arranged on a second plant part (4).

6. Arrangement according to one of Claims 1 to 5, **characterized in that** the first plant part (3) and/or the second plant part (4) is a heat exchanger.

7. Arrangement according to either of Claims 2 and 3, **characterized in that** the voltage source (13) is an AC voltage source or a pulsed DC voltage source.

8. Arrangement according to one of Claims 4 to 7, **characterized in that** the first controllable voltage source (19) and/or the second controllable voltage source (20) is a DC voltage source or a controllable AC voltage source or a frequency-synchronous controllable AC voltage source.

9. Method for detecting damage to an inner coating of a container, wherein a container (1b) connected to a lightning protection or a first equipotential bonding (2b) and with a first electrode for a first measuring point (9b) arranged in a first pipeline (5b) before the container (1b) is provided, wherein the first pipeline (5b) and the container (1b) are at least partially filled with an electrically conductive process liquid and wherein a container wall of the container (1b) with an insulating inner coating of plastic is provided, **characterized in that** a first plant part (3) with a second measuring point (10) and connected to the container (1b) via the first pipeline (5b) is provided and **in that** the detection of damage to the inner coating of the container (1b) takes place by means of a measuring arrangement electrically connected to the first measuring point (9b) and the second equipotential bonding (2) or to the second measuring point (10), wherein the first measuring point (9b) is provided on an electrode of a plastic intermediate flange disc (22b), which has one or more electrodes in contact with the process liquid.

10. Method according to Claim 9, **characterized in that** the measuring arrangement performs an insulation measurement or a resistance measurement for the detection of damage to the inner coating of the container (1b).

11. Method for detecting damage to an inner coating of a container, wherein a container (1b) connected to a lightning protection or a first equipotential bonding (2b) and with a first electrode for a first measuring point (9b) arranged in a pipeline (5b) before the container (1b) is provided, wherein the first pipeline (5b) and the container (1b) are at least partially filled with an electrically conductive process liquid and wherein a container wall of the container (1b) with an insulating inner coating of plastic is provided, **characterized in that** the measuring arrangement performs a voltage measurement, wherein a first controllable voltage source (19) is provided, which is connected by its first terminal via an ammeter (21) to the first measuring point (9b), which is provided by means of the first electrode of a plastic intermediate flange disc (22b), and by its second terminal to a second equipotential bonding (2), and a second controllable voltage source (20) is provided, which is connected by its first terminal to a further first measuring point (90), provided on a further plastic intermediate flange disc (22), wherein the voltage measurement is performed by means of a voltmeter (14) between a second measuring point (100) of the further plastic intermediate flange disc (22) and a second measuring point (10b) of the plastic intermediate flange disc (22b).

12. Method according to one of Claims 9 to 11, **characterized in that**, upon detection of damage to an inner coating of the container (1b), a digital or analog error signal signalling the damage is output.

13. Method according to one of Claims 9 to 12, **characterized in that**, for detecting damage to the inner coating of the container (1b), a measurement is performed with the measuring arrangement between at least two interconnected first measuring points (9a, 9b) of two containers (1a, 1b) and the second measuring point (100) and/or a third measuring point (11), which is provided on a second plant part (4).

## Revendications

1. Arrangement de détection d'un défaut au niveau d'un revêtement intérieur d'un récipient, le récipient (1b) possédant une paroi de récipient en un matériau conducteur, laquelle est reliée à un parafoudre ou à une première liaison équipotentielle (2b) et une première électrode pour un premier point de mesure (9b) étant disposée dans une première conduite tubulaire (5b) qui mène dans le récipient (1b), laquelle est reliée à un arrangement de mesure, la première conduite tubulaire (5b) et le récipient (1b) étant au moins partiellement remplis d'un liquide de procédé électriquement conducteur et la paroi de récipient possédant un revêtement intérieur isolant en matière plastique, **caractérisé en ce que** le récipient (1b) est relié à une première partie d'équipement (3) par le biais de la première conduite tubulaire (5b) constituée d'un matériau non électriquement conducteur, **en ce qu'**un deuxième point de mesure (10) est disposé sur la première partie d'équipement (3), **en ce que** le premier point de mesure (9b) est disposé au niveau de la première électrode d'un disque à bride intermédiaire en matière plastique (22b) et **en ce que** l'arrangement de mesure est relié de manière électriquement conductrice au premier point de mesure (9b) et à une deuxième liaison équipotentielle (2) ou au deuxième point de mesure (10).

2. Arrangement selon la revendication 1, **caractérisé en ce que** l'arrangement de mesure possède une source de tension (13) et un voltmètre (14), la source de tension (13) étant reliée par une première borne au premier point de mesure (9b) et par une deuxième borne à la liaison équipotentielle (2) ou au deuxième point de mesure (10) et le voltmètre (14) étant relié au premier point de mesure (9b) et directement ou par le biais d'un condensateur à la liaison équipotentielle (2) ou au deuxième point de mesure (10).

3. Arrangement selon la revendication 1 ou 2, **caractérisé en ce que** l'arrangement de mesure est un appareil de mesure de mise à la terre (12) ou un appareil de mesure de résistance pourvu d'une source de tension (18).

4. Arrangement de détection d'un défaut au niveau d'un revêtement intérieur d'un récipient, le récipient (1b) possédant une paroi de récipient en un matériau conducteur, laquelle est reliée à un parafoudre ou à une première liaison équipotentielle (2b) et une première électrode pour un premier point de mesure (9b) étant disposée dans une première conduite tubulaire (5b) qui mène dans le récipient (1b), laquelle est reliée à un arrangement de mesure, la première conduite tubulaire (5b) et le récipient (1b) étant au moins partiellement remplis d'un liquide de procédé électriquement conducteur et la paroi de récipient possédant un revêtement intérieur isolant en matière plastique, **caractérisé en ce que** l'arrangement de mesure possède une première source de tension (19) régulable, laquelle est reliée par sa première borne au premier point de mesure (9b) dans un disque à bride intermédiaire en matière plastique (22b) par le biais d'un ampèremètre (21) et par sa deuxième borne à une deuxième liaison équipotentielle (2), une deuxième source de tension (20) régulable, laquelle est reliée par sa première borne à un premier point de mesure supplémentaire (90) d'un disque à bride intermédiaire en matière plastique supplémentaire (22) disposé dans une deuxième conduite tubulaire ou dans une troisième conduite tubulaire et par sa deuxième borne à une troisième liaison équipotentielle (2), et un voltmètre (14), lequel est raccordé entre un deuxième point de mesure (100) du disque à bride intermédiaire en matière plastique supplémentaire (22) et un deuxième point de mesure (10b) du disque à bride intermédiaire en matière plastique (22b).

5. Arrangement selon l'une des revendications 1 à 4, **caractérisé en ce que** l'arrangement de mesure est relié à deux premiers points de mesure (9a, 9b) de deux récipients (1a, 1b) et/ou au deuxième point de mesure (100) et un troisième point de mesure (11), lequel est disposé au niveau d'une deuxième partie d'équipement (4).

6. Arrangement selon l'une des revendications 1 à 5, **caractérisé en ce que** la première partie d'équipement (3) et/ou la deuxième partie d'équipement (4) est un échangeur de chaleur.

7. Arrangement selon l'une des revendications 2 et 3, **caractérisé en ce que** la source de tension (13) est une source de tension alternative ou une source de tension continue pulsée.

8. Arrangement selon l'une des revendications 4 à 7, **caractérisé en ce que** la première source de tension (19) régulable et/ou la deuxième source de tension (20) régulable est une source de tension continue ou une source de tension alternative ou une source de tension alternative régulable synchrone en fréquence.

9. Procédé de détection de défauts au niveau d'un revêtement intérieur d'un récipient, un récipient (1b) relié à un parafoudre ou à une première liaison équipotentielle (2b) doté d'une première électrode pour un premier point de mesure (9b) disposée dans une première conduite tubulaire (5b) avant le récipient (1b) étant fourni, la première conduite tubulaire (5b) et le récipient (1b) étant au moins partiellement remplis d'un liquide de procédé électriquement conducteur et une paroi de récipient du récipient (1b) pourvue d'un revêtement intérieur isolant en matière plastique étant fournie, **caractérisé en ce qu'**une première partie d'équipement (3) reliée au récipient (1b) par le biais de la première conduite tubulaire (5b) et comprenant un deuxième point de mesure (10) est fournie et **en ce que** la détection du défaut au niveau du revêtement intérieur du récipient (1b) est effectuée au moyen d'un arrangement de mesure relié électriquement au premier point de mesure (9b) et à la deuxième liaison équipotentielle (2) ou au deuxième point de mesure (10), le premier point de mesure (9b) étant fourni au niveau d'une électrode d'un disque à bride intermédiaire en matière plastique (22b), lequel possède une ou plusieurs électrodes en contact avec le liquide de procédé.

10. Procédé selon la revendication 9, **caractérisé en ce que** l'arrangement de mesure effectue une mesure d'isolation ou une mesure de résistance en vue de détecter des défauts au niveau du revêtement intérieur du récipient (1b).

11. Procédé de détection de défauts au niveau d'un revêtement intérieur d'un récipient, un récipient (1b) relié à un parafoudre ou à une première liaison équipotentielle (2b) doté d'une première électrode pour un premier point de mesure (9b) disposée dans une conduite tubulaire (5b) avant le récipient (1b) étant fourni, la première conduite tubulaire (5b) et le récipient (1b) étant au moins partiellement remplis d'un liquide de procédé électriquement conducteur et une paroi de récipient du récipient (1b) pourvue d'un revêtement intérieur isolant en matière plastique étant fournie, **caractérisé en ce que** l'arrangement de mesure effectue une mesure de tension, une première source de tension (19) régulable étant fournie, laquelle est reliée par sa première borne par le biais d'un ampèremètre (21) au premier point de mesure (9b), lequel est fourni au moyen de la première électrode d'un disque à bride intermédiaire en matière plastique (22b), et par sa deuxième borne à une deuxième liaison équipotentielle (2), et une deuxième source de tension (20) régulable étant fournie, laquelle est reliée par sa première borne à un premier point de mesure supplémentaire (90) fourni au niveau d'un disque à bride intermédiaire en matière plastique supplémentaire (22), la mesure de tension étant effectuée au moyen d'un voltmètre (14) entre un deuxième point de mesure (100) du disque à bride intermédiaire en matière plastique supplémentaire (22) et un deuxième point de mesure (10b) du disque à bride intermédiaire en matière plastique (22b).

12. Procédé selon l'une des revendications 9 à 11, **caractérisé en ce que** lors d'une détection d'un défaut au niveau d'un revêtement intérieur du récipient (1b), un signal de défaut numérique ou analogique qui signale le défaut est délivré en sortie.

13. Procédé selon l'une des revendications 9 à 12, **caractérisé en ce que** pour la détection d'un défaut au niveau d'un revêtement intérieur du récipient (1b), une mesure est effectuée avec l'arrangement de mesure entre au moins deux premiers points de mesure (9a, 9b) reliés entre eux de deux récipients (1a, 1b) et le deuxième point de mesure (100) et/ou un troisième point de mesure (11), lequel est fourni au niveau d'une deuxième partie d'équipement (4) .
